# EUROPEAN PATENT APPLICATION

(11) **EP 4 782 913 A1**
(43) Date of publication of application: **29.07.2026**
(21) Application number: 25154109.0
(22) Date of filing: 27.01.2025
(51) Int. Cl.: G02F 1/225

(54) **SINGLE PHOTONIC INTEGRATED CIRCUIT**

(71) Applicant: Universität Heidelberg, 69117 Heidelberg (DE)
(72) Inventor: BANKWITZ, Julian Rasmus, 69115 Heidelberg (DE); PERNICE, Wolfram, 69120 Heidelberg (DE); JUNG, Erik, 76646 Bruchsal (DE); RÖMER, Julius, 69115 Heidelberg (DE); LOHMANN, Philipp, 69117 Heidelberg (DE); MA, Xinyu, 69120 Heidelberg (DE)
(74) Representative: Vossius & Partner Patentanwälte Rechtsanwälte mbB

(57) **Abstract**

A single photonic integrated circuit (PIC) comprising a first splitter for receiving light from a light source and dividing and distributing the light along N separate light pathways, wherein N is an integer larger than one, the PIC further comprising a first modulator unit disposed on each of the N light pathways for adjusting a phase and/or an amplitude of light in each of the light pathways.

## Description

The present invention relates to photonics, and more specifically to a photonic integrated circuit.

Traditional solutions for distributing and modulating light from a single light source, e.g., laser, face several key disadvantages. These systems rely on bulky, discrete optical components, such as beam splitters and modulators, which require precise alignment and occupy significant physical space. This makes them large, complex, and challenging to integrate into compact environments. The need for accurate optical alignment increases the risk of misalignment over time, leading to performance degradation and frequent recalibration needs.

Scalability is another significant limitation. As the number of outputs increases, each additional output requires its own modulator and corresponding components, which dramatically increases system complexity. This makes scaling the system to handle more outputs or more complex tasks impractical and expensive.

Additionally, the modulation capabilities in these setups are relatively limited. Each modulator must be placed as a separate element along the optical path, making it difficult to achieve precise and independent control over each output channel. This lack of integration limits the fine-tuning of characteristics like phase and amplitude modulation, which can be critical for certain applications.

There are also inefficiencies associated with using discrete components. The light must pass through multiple optical interfaces, each of which can introduce losses and reduce signal quality. Finally, these systems lack flexibility, making reconfiguration or upgrades to meet new or evolving application requirements complex, time-consuming, and costly due to the physical nature of the components.

The invention provides efficient and precise distribution, demutiplexing and modulation of light from a single input (e.g., a single laser input) to multiple outputs in a compact and scalable system. Traditional optical systems face challenges in managing and controlling light when multiple outputs are needed, particularly when phase and amplitude modulation of each output is required. The invention overcomes these limitations by using photonic integrated circuits (PICs) that not only split or multiplex the light but also modulate each output arm individually. This modulation is achieved through integrated modulators such as Pockels modulators made from lithium niobate (LN) or other materials, allowing for precise control over the light's phase and amplitude. Additionally, the system can incorporate complex modulator structures, such as double or triple modulator configurations, providing even more flexibility and fine-tuning. By addressing the challenges of distributing and controlling light in a highly integrated platform, the invention provides a scalable and flexible solution for applications that require both efficient beam delivery and precise modulation, such as quantum computing, spectroscopy, and frequency comb shaping.

More specifically, the invention integrates photonic integrated circuits (PICs) into a beam delivery system that allows a single input (e.g., a single laser input) to be distributed to multiple outputs. Each output can be either multiplexed/demultiplexed or split with customizable splitting ratios, addressing the need for flexible light management. Particularly, at least one of the PICs is not just used for splitting but also for modulating the light in each output arm. This modulation is achieved using modulators such as Pockels modulators, typically made from lithium niobate (LN), or other types of integrated modulators, allowing for precise control over the phase and amplitude of each output.

Moreover, the invention offers the ability to incorporate advanced modulator structures, such as double modulator combinations (e.g., heater + Pockels modulator) or even triple configurations (e.g., heater + Pockels modulator + heater), enabling more refined control over the light. This makes the system adaptable for various high-precision applications like frequency comb shaping or quantum computing with a single laser source.

In one aspect, the present invention provides a single photonic integrated circuit (PIC), said PIC comprising a first splitter and a corresponding number of first modulator units.

As used herein, a splitter (e.g., the first splitter mentioned above, the second splitter described below or other splitters) is a device for receiving light from a light source and dividing and distributing the light along more than one separate light pathways.

The splitter may comprise a power splitter, and optionally further comprise a wavelength splitter.

The splitter may comprise a passive splitter or an active splitter. Preferably, the passive splitter comprises a Y-branch splitter, a multimode interference (MMI) coupler, a directional coupler or a beam splitter; the active spitter preferably comprises an electro-optic or thermo-optic splitter that enables dynamic control of light splitting ratios.

More preferably, the splitter may comprise a multimode interferometer (MMI), a directional coupler, a Y-branch splitter or a photonic crystal-based splitter; even more preferably, the splitter comprises a multimode interferometer (MMI).

As used herein, a modulator unit (e.g., the first modulator unit mentioned above, the second modulator unit described below or other modulator units) is a device for adjusting a phase and/or an amplitude of light in each of the light pathways.

Preferably, a modulator unit comprises an electro-optic modulator such as a Pockels modulator, a thermo-optic modulator, a carrier-injection modulator, a piezoelectric modulator, an acousto-optic modulator and/or a thermal heater.

More preferably, the modulator unit comprises a thermal heater and an electro-optic modulator, the electro-optic modulator preferably being a Pockels modulator. The principle of providing a thermal heater in combination with an electro-optic modulator is explained as follows.

In a modulator (e.g., a Mach-Zehnder Interferometer (MZI) modulator), light is typically split into two arms using a splitter (e.g., a Y-branch or MMI coupler). Ideally, the light is evenly divided between the two arms (50/50 splitting). However, due to fabrication imperfections, wavelength-dependent variations, or environmental factors, the splitting ratio may deviate from its ideal value. This leads to a mismatch in the interference conditions at the combiner, potentially degrading the performance of the PIC. The heater is strategically placed in one or both arms of the modulator to correct these offsets. By heating the waveguide, the refractive index is locally modified via the thermo-optic effect, effectively changing the optical path length and balancing the split. For an MZI to function correctly, the optical signals in the two arms must maintain a precise phase relationship when they recombine. The heater can adjust the phase difference caused by splitting offsets, ensuring constructive or destructive interference as required by the application. The heater allows dynamic and fine-tuned adjustment of the optical path length during operation. This is particularly useful in compensating for temperature variations or operational drifts that could otherwise disrupt the desired splitting ratio or phase alignment. If the heater is positioned before the Pockels modulator, it ensures that the light entering the modulator is phase-corrected, optimizing the modulator's efficiency and performance. If the heater is located after the Pockels modulator, it compensates for any residual phase mismatch caused during modulation, ensuring that the output remains aligned for optimal interference at the MZI combiner. The combined use of the heater for splitting offset correction and the Pockels modulator for high-speed modulation ensures that the MZI operates with maximum fidelity, stability, and efficiency.

Alternatively, the modulator unit may comprise a first thermal heater, an electro-optic modulator and a second thermal heater, connected in sequence, the electro-optic modulator preferably being a Pockels modulator.

In the single PIC of the present invention, there are more than one first modulator units disposed on each of the light pathways of the first splitter; for example, the single PIC may comprise a first splitter for receiving light from a light source and dividing and distributing the light along N separate light pathways, and may further comprise N first modulator units each disposed on a respective one of the N light pathways for adjusting a phase and/or an amplitude of light in each of the light pathways.

The present invention provides a single PIC comprising the foregoing first splitter and first modulator units. As used herein, the term "single" indicates that the single PIC is preferably grown on and/or fabricated from a single monolithic substrate that serves as a carrier, where all core photonic functionalities are part of this single substrate. That is, preferably, the splitter(s) and the modulator units of the sing PIC are disposed on a monolithic material layer, which differs from the traditional approach where splitter(s) and modulator units are fabricated on separate substrates, forming independent PICs, each undergoing its own independent lithographic process.

Additional components from different materials may be added (e.g., placed or stacked) to the single PIC, but these additional components rely on the primary substrate for functionalities and cannot independently qualify as standalone PICs.

Both the splitter and the modulator units may be formed on one substrate, which forms the single substrate of the single PIC. Alternatively, the splitter may be formed on a first substrate, which preferably forms the substrate of the single PIC, and the modulator units are placed on a second substrate before their release and transfer to the substrate of the single PIC. This may rely on known processes such as micro-transfer printing (pTP), reference being made to, e.g., Roelkens et al., "Micro-Transfer Printing for Heterogeneous Si Photonic Integrated Circuits" (doi: 10.1109/JSTQE.2022.3222686) and Roelkens et al., "Present and future of micro-transfer printing for heterogeneous photonic integrated circuits" (doi: 10.1063/5.0181099).

Optional upgrades to the system allow for the inclusion of additional photonic components to enhance performance and tailor functionality to user requirements. For example, wavelength filters can be integrated to selectively transmit or block specific wavelengths, enabling spectral filtering and precision in wavelength-dependent applications.

Preferably, the single PIC further comprises a first wavelength filter disposed on one of the N light pathways, between the first splitter and one of the first modulator units, for selectively transmitting or blocking specific wavelengths. More preferably, the single PIC comprises N first wavelength filters disposed respectively on the N light pathways, each of the first wavelength filters being disposed between the first splitter and one of the first modulator units for selectively transmitting or blocking specific wavelengths.

The wavelength filter may be formed on the substrate of the single PIC or on another substrate and transferred to the substrate of the single PIC via micro-transfer printing (µTP).

The above describes a single PIC comprising a (first) splitter and a corresponding number of (first) modulator units for converting a single input to multiple outputs. However, the invention is not limited to such a single-layer multiplication. Subsequent to each of the first modulator units, a further splitter may be provided in the single PIC, followed by a further modulator unit, and this can scale up until the desired number of outputs is reached. For example, the single PIC may convert a single input to 10, 100, 1,000 or 10,000 output channels.

Preferably, the single PIC further comprises one to N second splitters, each disposed on one of the N light pathways, subsequently to a corresponding first modulator unit, for receiving light from the corresponding first modulator unit and dividing and distributing the light along M separate light pathways, wherein M is an integer larger than one, and M may be equal to or different from N. The single PIC preferably further comprises a second modulator unit disposed on each of the M light pathways for adjusting a phase and/or an amplitude of light in each of the M light pathways.

Optional photonics for the first splitter and the first modulator units, mentioned throughout the application, can also be added for the second (and subsequent) splitter(s) and the second (and subsequent) modulator units.

Preferably, the single PIC further comprises a second wavelength filter disposed on one of the light pathways, between one of the second splitters and a corresponding second modulator unit, for selectively transmitting or blocking specific wavelengths. More preferably, the single PIC comprises N second splitters and N×M second wavelength filters disposed respectively on the N×M light pathways, each of the second wavelength filters being disposed between one of the second splitters and one of the second modulator units for selectively transmitting or blocking specific wavelengths.

The foregoing aspect describes two-layer splitting. The first layer splits the single input to N pathways and a second layer further splits to N × M pathways. But the present invention is not limited thereon. The invention may have L different layers to split the light, possibly not even similar in each of the pathways. For example, a first-layer splitting (i.e., the first splitter) may be a 1x4 splitter, while the second layer splits only the first two pathways, leaving the second two untouched directly into two wavelength filters. Then, a third-layer splitting that splits all the pathways again can be provided.

That is, preferably, the single PIC further comprises one or more additional splitters, each disposed on one of the light pathways, subsequently to a corresponding modulator unit, for receiving light from the corresponding modulator unit and dividing and distributing the light along P light pathways, P being an integer larger than 1, and the single PIC further comprises a modulator unit disposed on each of the P light pathways for adjusting a phase and/or an amplitude of light in each of the P light pathways.

As used herein, N or M or P is an integer larger than 1. They may be the same or different from each other. They may each be any integer of 2 to 50.

Preferably, each of the light pathways is defined by an optical waveguide or channel. As described above, the modulator units may first be formed on another substrate and then be transferred onto the single substrate of the sine PIC. In such an embodiment, preferably, the modulator units are placed in such a proximity to the optical waveguide or channel to allow evanescent wave coupling (EWC).

Alternatively, the modulator units and splitters are connected via fiber optics.

Preferably, the single PIC comprises the light source, and more preferably the light source comprises a laser, such as a continuous wave (CW) laser. Even more preferably, the modulator units of the single PIC are configured to output laser pulses.

The present invention integrates light modulation and splitting capabilities directly into a single photonic integrated circuits (PIC). Unlike traditional systems that rely on separate, bulky components, the present invention allows for both the distribution and precise control of light in a highly compact and scalable platform. Each output arm can be independently modulated in phase and amplitude using integrated modulators such as Pockels modulators made from lithium niobate (LN) or other materials. By embedding these functionalities within a single PIC, the invention offers a high degree of integration, significantly reducing size and complexity while providing greater flexibility, precision and scalability. This integrated approach allows for efficient beam delivery and modulation in a single, coherent platform, making it ideal for advanced applications such as quantum computing, spectroscopy, and frequency comb shaping. The ability to connect multiple PICs using photonic wire bonds or fiber components further enhances the scalability of the system, making it adaptable to increasingly complex and demanding photonic tasks.

One of the primary benefits of the inventive PIC is its compact and integrated design. By incorporating light splitting and modulation capabilities directly into photonic integrated circuits (PICs), the system dramatically reduces both size and complexity. This compact form makes it much easier to integrate into various setups, particularly in environments where space is limited, such as in quantum computing or advanced optical systems.

Another key advantage is the precise control it offers over modulation. Each output arm can be modulated independently in both phase and amplitude using integrated Pockels modulators or other types of modulators. This fine level of control is highly advantageous for applications requiring high-performance light manipulation, such as frequency comb shaping or precisely targeting individual atoms.

A system using the inventive PICs also stands out due to its scalability. It can be expanded by connecting multiple PICs using photonic wire bonds or fiber components, allowing the system to handle increasingly complex tasks or additional output channels without adding excessive complexity. This is a significant improvement over traditional systems, which often become impractical as their complexity increases.

In addition, the invention supports versatile modulation structures, such as double or triple modulator configurations (e.g., heater + Pockels + heater), providing even more flexibility and tuning options. This capability is particularly important for applications that require highly customized and precise control over the light.

The system also achieves reduced power losses and increased efficiency by minimizing the number of optical interfaces, which helps to prevent signal degradation. With fewer components and interfaces involved, the system is more reliable and better suited for high-performance tasks.

Finally, the invention is highly adaptable to a wide range of advanced applications, including quantum computing, precision spectroscopy, and frequency comb generation. Its ability to combine beam delivery and modulation within a single, scalable platform makes it a superior solution to traditional approaches, offering more efficient and precise control of light for modern photonic applications.

In summary, the invention offers significant advantages in terms of compactness, precision, scalability, flexibility, efficiency, and adaptability, making it an advanced and highly effective solution for cutting-edge photonic systems.

Preferred embodiments of the present invention are further elucidated below with reference to the figures, which show:
- Fig. 1:: a schematic drawing of an exemplary embodiment of the inventive PIC; and
- Fig. 2:: a schematic drawing of an exemplary embodiment of the inventive PIC in case of a 1x4 splitter.

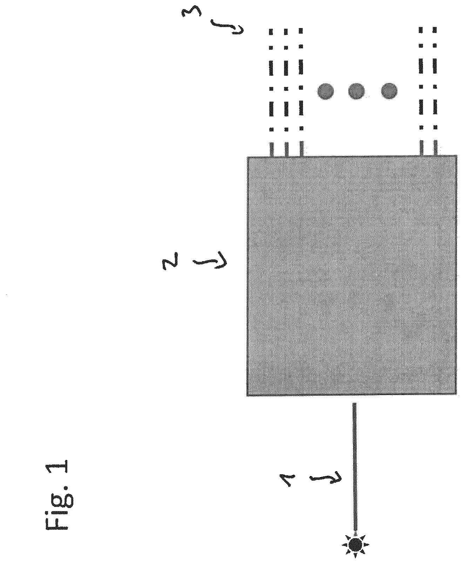

Fig. 1 schematically shows the principle of the present invention. A continuous laser beam 1 originating from, e.g., a CW laser (not shown) enters the pulsing beam splitter 2, which comprises the inventive PIC. Said PIC outputs an arbitrary number of pulsed laser beams 3.

The light path starts with input coupling to introduce light from the laser or fiber into the chip/PIC. Once the light is on the chip, it is guided through a Silicon Nitride Photonic Integrated Circuit (PIC), which serves two purposes:
Splitting the light: The PIC acts like a power divider, splitting the light into different arms.
Selective splitting: It can also divide the light not just by power but, if needed, by wavelength.

After splitting, the light is coupled off the Silicon Nitride PIC and onto a Lithium Niobate PIC. The Lithium Niobate PIC is then used to manipulate the light beams individually. This manipulation is achieved using thermal elements (heaters), electrical elements (electro-optic modulators), or a combination of both.

The pulsing beam splitter 2 combines two core functions into a single, space-efficient design, ensuring both high-speed operation and minimal insertion loss-key requirements for advanced optical systems:
A) 1xN beam splitter: This component efficiently splits the single input laser beam 1 into N output laser beams, enabling scalable and precise beam delivery.
B) electro-optical pulse generators: Built, e.g., using cutting-edge Pockels-active materials such as LiNbO₃, these pulse generators ensure accurate and high-speed modulation of laser pulses 3.

This inventive integration of beam splitting and pulse generation into one compact unit represents a significant step forward in achieving high-performance optical systems with reduced footprint and enhanced operational efficiency.

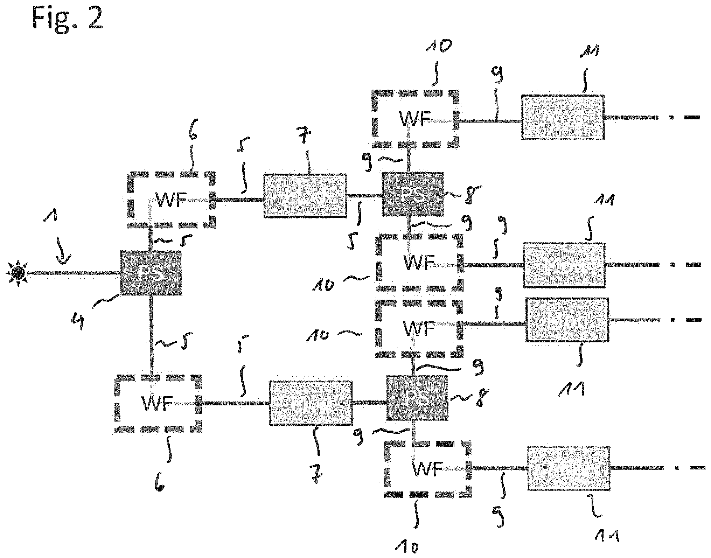

Fig. 2 schematically shows the main components of the pulsing beam slitter or PIC 2 and the light paths therein.

Again, the continuous laser beam 1 enters the PIC 2 (of Fig. 1) by first hitting the first splitter 4, which divides and distributes the laser beam along two separate light pathways 5. Optional wavelength filters 6 may be provided in one or both light pathways 5. The PIC further comprises two modulator units 7 disposed respectively on the two light pathways for adjusting a phase and/or an amplitude of light in each of the light pathways 5.

The PIC further comprises two second splitters 8, subsequently to the first modulator units 7, each for receiving light from a corresponding first modulator unit 7, which divide and distribute the laser beam along two separate light pathways 9.

Again, optional wavelength filters 10 may be provided in one or more light pathways 9. The PIC further comprises four second modulator units 11 disposed respectively on the four light pathways for adjusting a phase and/or an amplitude of light in each of the light pathways 9.

In this specific example, a combination of 1x2 splitters was chosen, but in other embodiments there may be arbitrary 1xN splitters. The splitters can also be wavelength dependent to split one wavelength in one arm and another one into a different arm.

The light pathways 5 and 9 are typically realized by photonic waveguides.

The inventive method allows all the laser beams from the Silicon Nitride PIC to be aligned side by side on the Lithium Niobate PIC, creating an array of individually controllable laser beams. These beams can then be utilized for various applications, such as:
Quantum computing control
Spectral shaping of frequency combs
Optical coherence tomography

The electronic controller (not shown) may comprise an FPGA (field-programmable gate array) that provides both AC and DC control. The DC component controls the heaters, while the AC component controls the electro-optic modulators.

The invention lies inter alia in the arrangement of the claimed components in this specific sequence to achieve a beam delivery system suitable for the mentioned applications.

The present invention allows for a number of important advantages vis-à-vis the prior art. A major inventive aspect of the claimed system is its ability to achieve an extinction ratio of up to 60dB. This is enabled through a novel configuration that combines electro-optic and heater modulators in a unique component arrangement. This approach results in a significantly larger extinction ratio than what is documented in existing literature.

Another key innovation lies in the high-speed operation of the modulators, which allows for real-time tuning using integrated photodiodes. This combination of high-speed modulation and integrated photodiodes has not been implemented in this manner before, nor has it been applied to the targeted application. High-speed modulation in lithium niobate modulators is achieved through the intrinsic electro-optic properties of the material, specifically the Pockels effect. This effect, unique to certain non-centrosymmetric crystals like lithium niobate, allows the refractive index of the material to change linearly in response to an applied electric field. This direct and proportional relationship between the electric field and the refractive index enables rapid modulation of light, making lithium niobate an ideal material for high-speed optical devices.

The mechanism begins with light being guided through a lithium niobate waveguide. These waveguides are precisely engineered to confine the light and ensure efficient interaction with the applied electric field. Electrodes placed near the waveguide generate the electric field when a voltage is applied. The strength and direction of the electric field modify the refractive index of the lithium niobate in the region around the waveguide. Because the change in refractive index directly affects the optical phase of the light propagating through the waveguide, the applied voltage effectively controls the phase of the light signal.

High-speed modulation is achieved because the Pockels effect operates on an extremely fast timescale, limited only by the speed of the electronic circuitry and the response time of the material, which is on the order of picoseconds or even faster. Additionally, lithium niobate has a high electro-optic coefficient, meaning that significant changes in the refractive index can be achieved with relatively low voltages. This allows the modulator to operate efficiently at the high frequencies required for modern optical communication systems, often exceeding tens of gigahertz.

Furthermore, lithium niobate's low optical loss and wide transparency range ensure that the modulated signal maintains its quality over a broad range of wavelengths. The material's stability and robustness also contribute to its ability to handle high-speed modulation without degradation over time. By leveraging these intrinsic properties, lithium niobate modulators can achieve rapid, precise, and efficient modulation of optical signals, which is essential for high-speed telecommunications and data transmission applications. In the present application, high speed refers to several GHz.

Additionally, the system includes control electronics specifically designed to complement the photonic circuit, enabling the creation of a stable, closed-loop feedback beam delivery system. This system can generate arbitrary pulse shapes while maintaining record-breaking extinction ratios.

This invention represents a significant advancement in the field of integrated photonics by introducing a device that accepts a single laser input and splits it into an arbitrary number of optical output channels. Each of these channels can be modulated independently or in combination, offering unparalleled flexibility and control over the optical signal. At its core, this innovation leverages a splitter tree architecture, where a single input is progressively divided into multiple branches, with modulators integrated at key branching points to provide unparalleled control over the output light. These modulators enable precise control over the amplitude and phase of light in each channel, supporting a variety of applications where both individual and collective modulation are required. The unique ability to transition from a single-channel input to multi-channel outputs, each with independent control, is the hallmark of this invention.

The splitting element in this device can utilize any current splitter technology known to integrated photonics. Multimode interferometers (MMIs) are a preferred choice due to their robustness, high splitting efficiency, and uniform power distribution. MMls work by creating interference patterns that divide the optical signal with minimal loss. However, alternative splitter technologies such as directional couplers, Y-branch splitters, or photonic crystal-based splitters can also be employed depending on the specific requirements of the system. The flexibility to use different splitter technologies ensures that the invention is compatible with a wide range of photonic platforms and applications.

To maximize the device's performance, the modulators integrated into the splitter tree are highly adaptable. These can include combinations of thermal heaters and electro-optic modulators (EOMs), where heaters provide fine adjustments to stabilize the phase and compensate for environmental changes, while EOMs enable fast, high-precision modulation. Other types of modulators, such as thermo-optic, carrier injection, or piezoelectric modulators, can also be employed. This ensures compatibility with all major photonic material platforms, including Thin-Film Lithium Niobate (TFLN), silicon photonics, indium phosphide (InP), and hybrid systems. TFLN is particularly notable for its high electro-optic coefficient and low optical loss, but silicon photonics offers cost-efficient scalability and CMOS compatibility, making it suitable for mass production.

The ability to control the modulators is a preferred aspect of this invention, which integrates the necessary control electronics into the system. These electronics are responsible for driving the modulators with precision, requiring an intimate understanding of the transfer function of each modulator. This transfer function describes how the electrical input is converted into an optical output, including the response characteristics of the modulator. Calibration of the transfer function to the electronics is critical for achieving the desired optical performance. The electronics can include DC drivers for static modulation, field-programmable gate arrays (FPGAs) for flexible and reprogrammable control, or application-specific integrated circuits (ASICs) for highly optimized and compact solutions. By calibrating the modulators to these control systems, the invention ensures that precise and reliable electrical pulses are generated to produce the desired optical outcomes in each channel.

An optional upgrade to the system allows for the inclusion of additional photonic components to enhance performance and tailor functionality to user requirements. For example, wavelength filters can be integrated to selectively transmit or block specific wavelengths, enabling spectral filtering and precision in wavelength-dependent applications. Erbium-Doped Fiber Amplifiers (EDFAs) can be incorporated to amplify signals within the system, compensating for losses and boosting output power where necessary. Similarly, components such as Spontaneous Parametric Down-Conversion (SPDC) modules can be added to generate entangled photon pairs for quantum communication or computing applications. Beyond these, other photonic components, such as optical isolators, circulators, wavelength multiplexers, and detectors, can be integrated to extend the versatility and functionality of the system. These examples are indicative of the system's potential and highlight the vast possibilities for customization and enhancement, making it a powerful tool adaptable to a wide array of needs.

An Erbium-Doped Fiber Amplifier (EDFA), traditionally used in optical fiber communication systems, can be integrated into a photonic integrated circuit (PIC) by adapting its amplification function to the planar waveguide structure of the PIC. While EDFAs are primarily fiber-based devices, their placement and integration into a PIC depend on the amplification needs, signal flow, and specific applications of the PIC. Here's how and where an EDFA might be placed within a PIC:
1. Input Stage
   An EDFA can be placed at the input stage of a PIC to amplify incoming optical signals before further processing within the circuit. This is particularly useful if the input signal is weak due to long-distance transmission or losses from preceding components. By boosting the signal's power, the EDFA ensures adequate signal levels for downstream components, improving signal-to-noise ratio (SNR).
2. Mid-Circuit Amplification
   EDFAs can also be located within the PIC, between stages of processing. For example, if the PIC includes multiple cascaded components (e.g., splitters, modulators, or filters), an EDFA in the middle of the circuit can counteract accumulated losses from preceding stages. This placement is common in complex PIC designs where signal attenuation needs to be managed dynamically.
3. Output Stage
   Another strategic location for an EDFA is at the output stage of the PIC. In this configuration, the EDFA amplifies the processed optical signal before it exits the PIC, compensating for insertion losses or boosting the signal for transmission over optical fibers. This placement is particularly beneficial for long-distance communication systems or systems requiring high output power levels.
4. Feedback and Monitoring Loops
   EDFAs may also be placed in feedback loops within the PIC for signal monitoring or stabilization. For instance, an EDFA can amplify a portion of the light tapped from the main circuit to feed into monitoring systems or feedback mechanisms for active control.

The integration of Spontaneous Parametric Down-Conversion (SPDC) and Second-Harmonic Generation (SHG) sources into photonic integrated circuits (PICs) depends on the desired functionality and application. These nonlinear optical processes rely on the second-order nonlinearities of materials such as lithium niobate, aluminum nitride, or periodically poled structures. Their placement within the circuit is critical for achieving efficient wavelength conversion or photon-pair generation while maintaining the overall compactness and efficiency of the PIC.

At the input stage, SPDC and SHG sources are often used to generate the initial light signals required for subsequent operations. For SPDC, a high-power pump laser is directed into the nonlinear material to generate pairs of entangled photons at lower energy (longer wavelength). This is a common setup for PICs designed for quantum applications, such as quantum key distribution or quantum computing, where the generated entangled photons are routed into complex processing networks within the circuit. SHG sources at the input stage serve a different purpose, converting a low-frequency (long-wavelength) input signal into its second harmonic, a high-frequency (short-wavelength) output signal. This is especially useful in PICs requiring short-wavelength signals that are not readily available from external laser sources.

In some cases, SPDC or SHG sources are positioned mid-circuit to enable dynamic wavelength conversion or photon-pair generation as part of an ongoing process. For SPDC, this might involve generating entangled photons mid-way through the circuit for routing into quantum gates or measurement systems. SHG sources placed mid-circuit can be used to convert intermediate wavelengths produced by upstream components into a desired wavelength for further processing. This approach is particularly relevant in PICs designed for optical signal processing or wavelength multiplexing applications, where wavelength conversion enhances functionality.

At the output stage, SPDC and SHG sources serve to prepare the final optical signals for transmission or detection. For SPDC, the entangled photon pairs generated at the output can be sent directly to external quantum communication systems or detectors. SHG sources, when placed at the output, are typically used to up-convert wavelengths for applications such as spectroscopy, metrology, or optical coherence tomography, where shorter wavelengths are advantageous for higher resolution or broader spectral coverage.

The integration of SPDC and SHG sources into PICs presents unique challenges, including phase-matching requirements and efficient coupling of pump lasers. Periodically poled materials are often used to achieve quasi-phase-matching, which maximizes the efficiency of the nonlinear interaction. Additionally, careful thermal and optical management is necessary to maintain stable operation and ensure that the generated photons or converted wavelengths are efficiently routed within the circuit.

In summary, SPDC and SHG sources can be strategically placed at the input, mid-circuit, or output stages of a PIC, depending on their role in the circuit's functionality. Their integration enhances the versatility of PICs, enabling applications in quantum technologies, wavelength conversion, and advanced optical signal processing.

A key innovation of this system is its ability to handle complex waveforms across multiple output channels while maintaining a compact, integrated design. By consolidating the splitter and modulator into a single photonic integrated circuit (PIC), the device minimizes optical losses, reduces the footprint, and eliminates the need for external components that can introduce alignment issues or mechanical vulnerabilities. Furthermore, the inclusion of integrated control electronics ensures seamless operation, as the system can dynamically adapt to varying operational conditions and application requirements.

This invention has broad applications across numerous fields. In quantum technologies, the ability to precisely modulate light allows for addressing individual neutral atoms or atom arrays, which is highly advantageous for quantum computing and secure quantum communication. In optical communications, the single-input-to-multi-output functionality supports multi-channel signal generation, high-bandwidth data transmission, and dynamic reconfigurability in optical networks. The device also finds applications in spectroscopy and sensing, where it enables advanced spectral shaping and parallel detection across multiple channels. Additionally, in photonics-based computation, the system provides the precision and scalability needed for high-speed optical processing.

By offering unparalleled control over multi-channel optical signals, this invention achieves several performance enhancements. These include reduced optical losses through on-chip integration, improved reliability by eliminating inter-chip connections, and enhanced modulation precision through calibrated control electronics. The ability to transition from a single laser input to multiple independently modulated outputs underscores the flexibility and utility of this system.

The invention also incorporates provisions for user-friendly calibration and operation. For instance, the control electronics can be designed to automatically measure and adjust the transfer function of the modulators, ensuring consistent performance over time. These features make the invention highly accessible, even for users without specialized expertise in photonics. Additionally, by leveraging scalable photonic platforms and advanced fabrication techniques, the device is poised for widespread adoption across industries.

This invention represents a groundbreaking step in the evolution of integrated photonics. Its ability to combine single-input, multi-output optical splitting with precise modulation, integrated control electronics, and optional advanced photonic components such as filters, amplifiers, SPDC modules, and other specialized devices sets a new benchmark for what is possible in compact photonic systems. By addressing the limitations of current technologies and offering a scalable, versatile, and high-performance solution, this invention paves the way for the next generation of optical devices, enabling advancements in quantum computing, telecommunications, sensing, and beyond.

The present invention comprises the following exemplary, non-limiting aspects:
1. A single photonic integrated circuit, PIC, comprising:
   a first splitter for receiving light from a light source and dividing and distributing the light along N separate light pathways, wherein N is an integer larger than one; and
   a first modulator unit disposed on each of the N light pathways for adjusting a phase and/or an amplitude of light in each of the light pathways.
2. The single PIC of aspect 1, further comprising:
   a first wavelength filter disposed on one of the N light pathways, between the first splitter and one of the first modulator units, for selectively transmitting or blocking specific wavelengths,
   preferably, wherein the single PIC comprises:
      N first wavelength filters disposed respectively on the N light pathways, each of the first wavelength filters being disposed between the first splitter and one of the first modulator units for selectively transmitting or blocking specific wavelengths.
3. The single PIC of aspect 1 or 2, further comprising:
   one to N second splitters, each disposed on one of the N light pathways, subsequently to a corresponding first modulator unit, for receiving light from the corresponding first modulator unit and dividing and distributing the light along M separate light pathways, wherein M is an integer larger than one; and
   a second modulator unit disposed on each of the M light pathways for adjusting a phase and/or an amplitude of light in each of the M light pathways.
4. The single PIC of aspect 3, further comprising:
   a second wavelength filter disposed on one of the light pathways, between one of the second splitters and a corresponding second modulator unit, for selectively transmitting or blocking specific wavelengths,
   preferably, wherein the single PIC comprises:
      N second splitters; and
      N×M second wavelength filters disposed respectively on the N×M light pathways, each of the second wavelength filters being disposed between one of the second splitters and one of the second modulator units for selectively transmitting or blocking specific wavelengths.
5. The single PIC of aspect 3 or 4, further comprising:
   one or more additional splitters, each disposed on one of the light pathways, subsequently to a corresponding modulator unit, for receiving light from the corresponding modulator unit and dividing and distributing the light along P light pathways, wherein P is an integer larger than one; and
   a modulator unit disposed on each of the P light pathways for adjusting a phase and/or an amplitude of light in each of the P light pathways.
6. The single PIC of any preceding aspect, wherein the splitter(s) and the modulator units are disposed on a monolithic material layer.
7. The single PIC of any preceding aspect, wherein the modulator units are disposed on the respective light pathways via micro-transfer printing (µTP).
8. The single PIC of any preceding aspect, wherein the modulator units and splitters are connected via fiber optics.
9. The single PIC of any preceding aspect, wherein each of the light pathways is defined, partially or entirely, by an optical waveguide or channel.
10. The single PIC of the preceding aspect, wherein the modulator units are placed in such a proximity to the optical waveguide or channel to allow evanescent wave coupling (EWC).
11. The single PIC of any preceding aspect, wherein each of the first or second modulator units comprises an electro-optic modulator, preferably a Pockels modulator; a thermo-optic modulator; a carrier-injection modulator; a piezoelectric modulator; an acousto-optic modulator and/or a thermal heater.
12. The single PIC of any preceding aspect, wherein each of the first or second modulator units comprises a thermal heater and an electro-optic modulator, the electro-optic modulator preferably being a Pockels modulator.
13. The single PIC of any preceding aspect, wherein each of the first or second modulator units comprises a first thermal heater, an electro-optic modulator and a second thermal heater, connected in sequence, the electro-optic modulator preferably being a Pockels modulator.
14. The single PIC of any preceding aspect, wherein the first or second splitters comprise passive splitters or active splitters,
   preferably wherein
   the passive splitters comprising Y-branch splitters; multimode interference, MMI, couplers; directional couplers or beam splitters, and/or
   the active spitters comprising electro-optic or thermo-optic splitters that enable dynamic control of light splitting ratios.
15. The single PIC of any preceding aspect, wherein the first or second splitters comprise a power splitter, and optionally further comprise a wavelength splitter.
16. The single PIC of any preceding aspect, wherein the first or second splitters comprise a multimode interferometer, MMI, a directional coupler, a Y-branch splitter or a photonic crystal-based splitter, preferably the first or second splitters comprising a multimode interferometer, MMI.
17. The single PIC of any preceding aspect comprising the light source.
18. The single PIC of any preceding aspect, wherein the light source comprises a laser, preferably a continuous wave, CW, laser.
19. The single PIC of the preceding aspect, wherein the first or second modulator units are configured to output laser pulses.
20. The single PIC of any preceding aspect, wherein N or M or P is any integer of 2 to 50.
21. The single PIC of any preceding aspect, further comprising Erbium-Doped Fiber Amplifiers (EDFAs) for amplifying signals within the PIC.
22. The single PIC of any preceding aspect, further comprising Spontaneous Parametric Down-Conversion (SPDC) and Second-Harmonic Generation (SHG) sources.

## Claims

1. A single photonic integrated circuit, PIC, comprising:
a first splitter for receiving light from a light source and dividing and distributing the light along N separate light pathways, wherein N is an integer larger than one; and
a first modulator unit disposed on each of the N light pathways for adjusting a phase and/or an amplitude of light in each of the light pathways.

2. The single PIC of claim 1, further comprising:
a first wavelength filter disposed on one of the N light pathways, between the first splitter and one of the first modulator units, for selectively transmitting or blocking specific wavelengths,
preferably, wherein the single PIC comprises:
N first wavelength filters disposed respectively on the N light pathways, each of the first wavelength filters being disposed between the first splitter and one of the first modulator units for selectively transmitting or blocking specific wavelengths.

3. The single PIC of claim 1 or 2, further comprising:
one to N second splitters, each disposed on one of the N light pathways, subsequently to a corresponding first modulator unit, for receiving light from the corresponding first modulator unit and dividing and distributing the light along M separate light pathways, wherein M is an integer larger than one; and
a second modulator unit disposed on each of the M light pathways for adjusting a phase and/or an amplitude of light in each of the M light pathways.

4. The single PIC of claim 3, further comprising:
a second wavelength filter disposed on one of the light pathways, between one of the second splitters and a corresponding second modulator unit, for selectively transmitting or blocking specific wavelengths,
preferably, wherein the single PIC comprises:
N second splitters; and
N×M second wavelength filters disposed respectively on the N×M light pathways, each of the second wavelength filters being disposed between one of the second splitters and one of the second modulator units for selectively transmitting or blocking specific wavelengths.

5. The single PIC of any preceding claim, wherein the splitter(s) and the modulator units are disposed on a monolithic material layer.

6. The single PIC of any preceding claim, wherein the modulator units are disposed on the respective light pathways via micro-transfer printing (µTP).

7. The single PIC of any preceding claim, wherein each of the light pathways is defined, partially or entirely, by an optical waveguide or channel.

8. The single PIC of the preceding claim, wherein the modulator units are placed in such a proximity to the optical waveguide or channel to allow evanescent wave coupling (EWC).

9. The single PIC of any preceding claim, wherein each of the first or second modulator units comprises an electro-optic modulator, preferably a Pockels modulator; a thermo-optic modulator; a carrier-injection modulator; a piezoelectric modulator; an acousto-optic modulator and/or a thermal heater.

10. The single PIC of any preceding claim, wherein each of the first or second modulator units comprises a thermal heater and an electro-optic modulator, the electro-optic modulator preferably being a Pockels modulator.

11. The single PIC of any preceding claim, wherein each of the first or second modulator units comprises a first thermal heater, an electro-optic modulator and a second thermal heater, connected in sequence, the electro-optic modulator preferably being a Pockels modulator.

12. The single PIC of any preceding claim, wherein the first or second splitters comprise a multimode interferometer, MMI, a directional coupler, a Y-branch splitter or a photonic crystal-based splitter, preferably the first or second splitters comprising a multimode interferometer, MMI.

13. The single PIC of any preceding claim comprising the light source, preferably the light source comprises a laser, preferably a continuous wave, CW, laser.

14. The single PIC of the preceding claim, wherein the first or second modulator units are configured to output laser pulses.

15. The single PIC of any preceding claim, wherein N or M or P is any integer of 2 to 50.
